# EUROPEAN PATENT APPLICATION

(11) **EP 4 201 573 A1**
(43) Date of publication of application: **28.06.2023**
(21) Application number: 22216357.8
(22) Date of filing: 23.12.2022
(51) Int. Cl.: B23K 11/11, B23K 13/01, B23K 20/02, B23K 20/14, B23K 103/04, B23K 103/08, B23K 101/34, B23K 103/10, B23K 103/14

(54) **METHOD OF BONDING METALLIC COMPONENTS TO FORM MACHINING PREFORM**

(30) Priority: 27.12.2021 US 202163293902 P; 07.11.2022 US 202217982129
(71) Applicant: Spirit AeroSystems, Inc., Wichita, KS 67210 (US)
(72) Inventor: WAGNER, James Michael, Wichita, 67210 (US); NASSERRAFI, Rahbar, Wichita, 67210 (US); TOIVONEN, Paul Ray, Wichita, 67210 (US); MISAK, Heath Edward, Wichita, 67210 (US); CLASPER, Craig Matthew, Wichita, 67210 (US)
(74) Representative: HGF

(57) **Abstract**

A method of bonding two or more metallic components into a single piece. The bonding surfaces of the metallic components are protected from reaction with the environment. A force is applied to the metallic components to push the bonding surfaces together. Simultaneous with applying the force, an electric current is passed through the bonding surfaces to joule heat and weld the bonding surfaces together to form the single piece. The bonding surfaces may be protected by plating with a noble metal, applying a coating, shielding with a noble gas, or placing into a vacuum. A press may be used to apply the force. The force and the electric current may be sufficient to push out metal around the joint of the bonding surfaces, and at least one of the bonding surfaces may be drafted to facilitate pushing out the metal. The electric current may be pulsed to induce electroplasticity.

## Description

### RELATED APPLICATION

The present U.S. non-provisional patent application claims priority of a prior-filed U.S provisional patent application with the same title, Serial No. 63/293,902, filed December 27, 2021. The entire content of the identified prior-filed application is incorporated by reference as if fully set forth herein.

### FIELD

The present invention concerns systems and methods for bonding metallic components to form larger pieces, and more particularly, embodiments provide a method of bonding two or more metallic components into a single piece by protecting the bonding surfaces from reaction with the environment and then simultaneously applying force and passing electric current through the bonding surfaces to joule heat and induce electroplasticity and weld them together.

### BACKGROUND

It is often desirable to improve the bonding of adjoining components during forge welding, or solid state welding, including when joule heating is used to heat the components. For example, bonding surfaces may be cleaned and/or fluxed to reduce oxidation and other contamination which could otherwise result in weaker bonds and undermine the structural validity of resulting pieces. However, physical gaps as well as contaminated metal in the joints can still undermine the validity of welds.

### SUMMARY

Embodiments of the present invention overcome the above-described and other problems and limitations in the prior art by providing a method of bonding two or more metallic components into a single piece by protecting the bonding surfaces from reaction with the environment and then simultaneously applying force and passing electric current through the bonding surfaces to joule heat and weld them together. The electric current may be pulsed to induce electroplasticity in the components to improve bonding across the joint by facilitating reducing gaps in the joint and pushing contaminated metal out of the joint, while also allowing for using a lower welding temperature.

An embodiment of a method of welding or otherwise bonding two or more metallic components together into a single piece comprises the following steps. The bonding surfaces of the two or more metallic components are protected from reaction with the environment. A force is applied to the two or more metallic components to push the bonding surfaces together. Simultaneous with applying the force, an electric current is passed through the bonding surfaces to joule heat and weld the bonding surfaces together to form the single piece.

Various implementations of the above-described embodiment may include any one or more of the following features. Protecting the bonding surfaces may comprise plating the bonding surfaces with a noble metal, applying a coating to the bonding surfaces, shielding the bonding surfaces with a noble gas, and/or placing the bonding surfaces in a vacuum. Applying the force may comprise using a press. The force and the electric current may be sufficient to push out approximately between one-hundredth inch and one-tenth inch of metal around the joint of the bonding surfaces, and at least one of the bonding surfaces may be drafted to facilitate pushing out the metal around joint of the bonding surfaces. The electric current may be pulsed to induce electroplasticity in the components to improve bonding across the joint.

The invention may also be understood with reference to the following numbered clauses:
Clause 1. A method of bonding two or more metallic components together, each of the two or more metallic components having a bonding surface, the method comprising:
   protecting the bonding surface of each of the two or more metallic components;
   applying a force to each of the two or more metallic components to push the bonding surfaces together; and
   simultaneous with applying the forces, applying an electric current through the bonding surfaces to joule heat and forge weld the bonding surfaces together to form a single piece.
Clause 2. The method of clause 1, wherein the step of protecting the bonding surfaces comprises plating at least one of the bonding surfaces with a noble metal.
Clause 3. The method of Clause 1, wherein the step of protecting the bonding surfaces comprises applying a coating to at least one of the bonding surfaces.
Clause 4. The method of Clause 1, wherein the step of protecting the bonding surfaces comprises shielding the bonding surfaces with a noble gas.
Clause 5. The method of Clause 1, wherein the step of protecting the bonding surfaces comprises placing the bonding surfaces in a vacuum.
Clause 6. The method of Clause 1, wherein the step of applying the force comprises using a press to push each of the bonding surfaces of the one or more components together.
Clause 7. The method of Clause 1, wherein the step of applying an electric current is pulsed to induce electroplasticity in the two or more metallic components.
Clause 8. A method of bonding two or more metallic components into a single piece, each of the two or more metallic components comprising an bonding surface, the method comprising:
   protecting the bonding surfaces of the two or more metallic components from reaction with an environment;
   applying a force to the two or more metallic components to push the bonding surfaces together; and
   simultaneous with applying the force, passing an electric current through the bonding surfaces to joule heat and weld the bonding surfaces together at a joint to form the single piece,
   wherein the electric current is pulsed to induce electroplasticity in the two or more metallic components.
Clause 9. The method of Clause 8, wherein protecting the bonding surfaces comprises plating the bonding surfaces with a noble metal.
Clause 10. The method of Clause 8, wherein protecting the bonding surfaces comprises applying a coating to the bonding surfaces.
Clause 11. The method of Clause 8, wherein protecting the bonding surfaces comprises shielding the bonding surfaces with a noble gas.
Clause 12. The method of Clause 8, wherein protecting the bonding surfaces comprises placing the bonding surfaces in a vacuum.
Clause 13. The method of Clause 8, wherein applying the force comprises using a press to push the bonding surfaces together.
Clause 14. The method of Clause 8, wherein the force and the electric current are sufficient to push out between one-hundredth inch and one-tenth inch of metal at the joint around the bonding surfaces.
Clause 15. A method of bonding at least two metallic components together, each of the at least two components having a bonding surface, the method comprising:
   positioning each of the bonding surfaces immediately adjacent to each other;
   applying a force to each of the two or more metallic components to push the bonding surfaces together; and
   simultaneous with applying the forces, applying an electric current through the bonding surfaces to permanently join the at least two components together to form a single piece.
Clause 16. The method of Clause 15, further comprising protecting at least one of the bonding surfaces after positioning each of the bonding surfaces immediately adjacent to each other.
Clause 17. The method of Clause 16, wherein protecting at least one of the bonding surfaces includes plating the at least one of the bonding surface with a noble metal.
Clause 18. The method of Clause 17, wherein plating at least one of the bonding surfaces includes applying a layer of gold, palladium, or platinum to at least one of the bonding surfaces.
Clause 19. The method of Clause 16, wherein protecting at least one of the bonding surfaces includes shielding at least one of the bonding surfaces by applying a continuous flow of an inert gas across the entire bonding surface being shielded prior to and during at least a portion of the steps of applying a force and applying an electric current.
Clause 20. The method of Clause 16, wherein protecting at least one of the bonding surfaces includes coating the at least one of the bonding surfaces with a protective flux.
Clause 21. The method of Clause 16, wherein protecting at least one of the bonding surfaces includes placing each of the at least two components into an inert chamber or a vacuum environment prior to the step of positioning the bonding surfaces immediately adjacent to each other.
Clause 22. The method of Clause 15, wherein the force applied to force to each of the two or more metallic components is between about ten and thirty tons.
Clause 23. The method of Clause 15, wherein the step of applying an electric current through the bonding surfaces causes a temperature of the bonding surfaces to increase to about seven hundred and two thousand one hundred degrees Fahrenheit (700°-2100° F).

This summary is not intended to identify essential features of the present invention, and is not intended to be used to limit the scope of the claims. These and other aspects of the present invention are described below in greater detail.

### DRAWINGS

Embodiments of the present invention are described in detail below with reference to the attached drawing figures, wherein:
FIG. 1 is a flowchart of steps performed in an embodiment of a method of bonding two or more metallic components into a single piece by protecting the bonding surfaces from reaction with the environment and then simultaneously applying force and passing electric current through the bonding surfaces to joule heat and induce electroplasticity and weld them together;
FIG. 2 is an exploded elevation view of two metallic components to be bonding into a single piece, wherein one of the metallic components is shown with a drafted surface;
FIG. 3 is an exploded elevation view of the two metallic components of FIG. 2 with a coating applied to the surface of each component;
FIG. 4 is an elevation view of the two metallic components of FIG. 3 ready to be simultaneously pushed together and heated;
FIG. 5 is an elevation view of the two metallic components of FIG. 4 pushed together and heated, with the coating and/or metal being pushed from the joint as the components are welded together to form the single piece; and
FIG. 6 is an elevation view of the two metallic components of FIG. 5 bonded into the single piece.

The figures are not intended to limit the present invention to the specific embodiments they depict. The drawings are not necessarily to scale.

### DETAILED DESCRIPTION

The following detailed description of embodiments of the invention references the accompanying figures. The embodiments are intended to describe aspects of the invention in sufficient detail to enable those with ordinary skill in the art to practice the invention. The embodiments of the invention are illustrated by way of example and not by way of limitation. Other embodiments may be utilized and changes may be made without departing from the scope of the claims. The following description is, therefore, not limiting. The scope of the present invention is defined only by the appended claims, along with the full scope of equivalents to which such claims are entitled.

In this description, references to "one embodiment," "an embodiment," or "embodiments" mean that the feature or features referred to are included in at least one embodiment of the invention. Separate references to "one embodiment," "an embodiment," or "embodiments" in this description do not necessarily refer to the same embodiment and are not mutually exclusive unless so stated. Specifically, a feature, component, action, step, etc. described in one embodiment may also be included in other embodiments, but is not necessarily included. Thus, particular implementations of the present invention can include a variety of combinations and/or integrations of the embodiments described herein.

Broadly, embodiments provide a method of welding or otherwise permanently bonding two or more metallic components into a single piece by protecting the bonding surfaces from reaction with the environment and then simultaneously applying force and passing electric current through the bonding surfaces to joule heat and thereby weld the bonding surfaces together. In more detail, in a metal additive manufacturing process, two or more metallic components (pieces, parts, etc.) may be coated or otherwise protected on and around their bonding surfaces in order to prevent oxidation or other reaction with the environment, and are subsequently joined together into an integrated whole by the simultaneous application of force and passing of electric current through the bonding surfaces to joule heat and weld them together. The electric current may be pulsed to induce electroplasticity in the components to improve bonding across the joint by facilitating reducing gaps in the joint and pushing contaminated metal out of the joint, while also allowing for using a lower welding temperature.

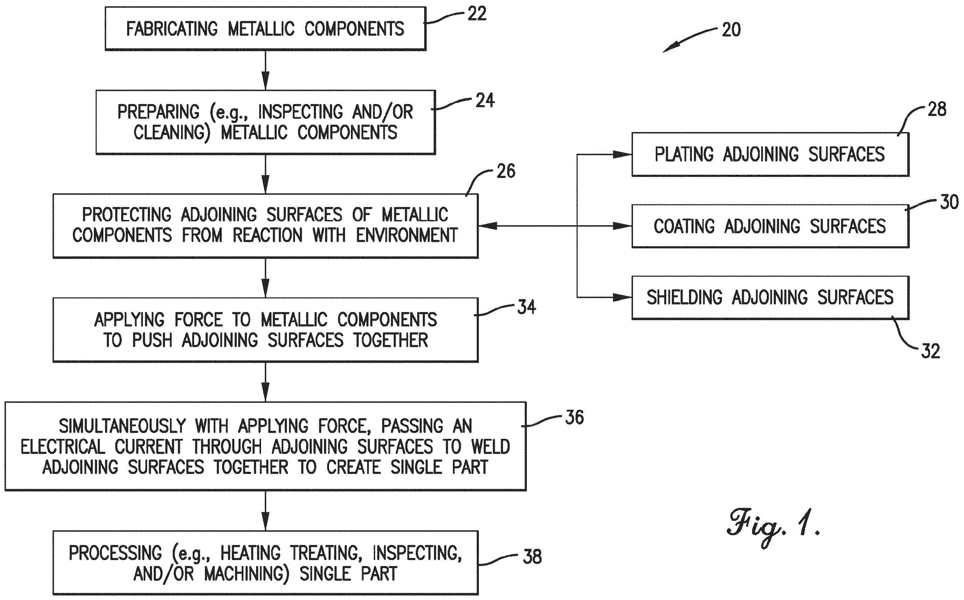

Referring to FIGS. 1-6, an embodiment of a method 20 is shown for forge welding or solid state bonding two or more metallic components together to form a single part, such as a machining preform. FIGS. 1-6 illustrate forge welding or solid state bonding two components 122, 124 together to form a single piece, but it should be understood by one having ordinary skill in the art that the method described herein can also be used to forge weld or solid state bond two or more components together to form a single piece. The method 20 comprises the following steps. However, in some alternative embodiments of the invention, various steps of the method 20 may be omitted or steps may occur out of the order depicted in FIG. 1 without departing from the scope of the invention. For example, two blocks shown in succession in FIG. 1 may in fact be executed substantially concurrently, or blocks may sometimes be executed in the reverse order depending upon the functionality involved.

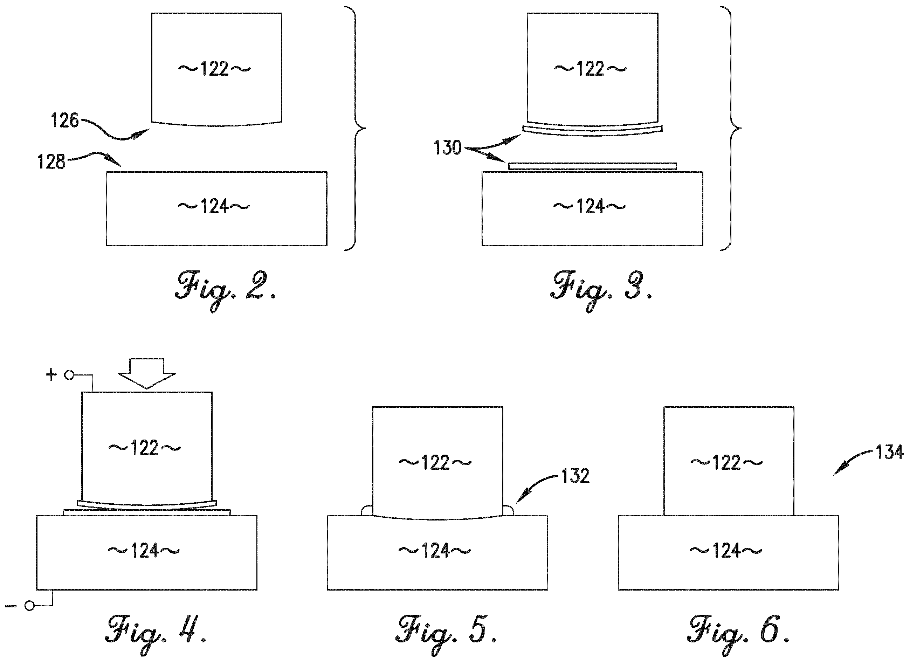

Two or more components 122, 124 are forge welded or solid state bonded for joining to form an integrated part, as shown in step 22 of FIG. 1 and depicted in FIG. 2. The components 122, 124 may be made from forgings, extrusions, plates, additively manufactured parts, castings, tubing, formed sheet metal, or substantially any other suitable technique. The components 122, 124 are formed of metal, not non-metals, and may be made from different alloys and/or using different manufacturing methods. The bonding surfaces 126, 128 of the components may be machined or otherwise suitably prepared to ensure that they are free of scale and oxides and have consistent dimensions and good fit with each other. Joint design may include tapered, drafted, or otherwise non-flat bonding surfaces on one or both components as desirable or necessary to reduce or eliminate the containment or entrapment of the coating and/or other contaminants in the joint. The fabricated components 122, 124 are inspected and cleaned, as shown in step 24. Alternatively, the inspecting and/or cleaning of the fabricated components can be omitted or performed in another sequence without departing from the scope of the technology described herein. In some embodiments, the components 122, 124 are formed of the same metallic material.

The components 122, 124, or at least the bonding surfaces 126, 128 thereof, are protected, as shown in step 26 and depicted in FIG. 3. In one implementation, the components 122, 124 may be protected by plating 130 with one or more noble metals such as gold, palladium, or platinum, as shown in step 28. Brush plating may be used where only localized areas need to be plated. In an alternative implementation, the components 122, 124 may be protected by coating with a protective flux or other coating 130 to cover the bonding surfaces 126, 128 and coat the areas of each component that will be heated above a critical temperature that is known to react to the interstitial elements or molecules present in air, as shown in step 30. The coating 130 may be a fugitive cover that protects the heated surfaces and subsequently is pushed out of the bond line as the heated interfaces are pressed together to form the metallurgical bond. In another alternative implementation, the components 122, 124 may be locally shielded by the introduction of a noble gas which displaces oxygen and/or other ambient gases or the heating and bonding process may be performed in a vacuum or in an inert atmosphere chamber, as shown in step 32.

In more detail, proper protection of the bonding surfaces 126, 128 reduces or avoids contamination at the heated surfaces due to a reaction between the heated surfaces and the environment (e.g., air and water vapor). For example, when heated above one thousand degrees Fahrenheit, titanium alloys react with interstitial elements present in the environment (oxygen, nitrogen, carbon dioxide, water vapor) resulting in embrittlement of the alloy. For nickel base super alloys or stainless steels, the oxygen and nitrogen in ambient air can react with chromium or other reactive elements within the alloy and create tenacious oxide or nitride layers which prevent achieving full metallurgical bonding between the bonding surfaces. Carbon and alloy steels are also subject to scaling and decarburization at high temperatures that can also interfere with bonding and result in defects, inferior microstructure, and inferior mechanical properties. When heated, aluminum alloys also form oxides and nitrides which may be desirable or necessary to avoid. By protecting the surfaces 126, 128 of the components 122, 124 during the bonding process by placing the components 122, 124 within a vacuum chamber, the formation of oxides and nitrides when bonding aluminum alloys in this method is significantly reduced or eliminated.

The type of plating, coating, or other protection used may be chosen depending on the alloys being joined together. It may be desirable or necessary that the coatings have metallurgical compatibility with the coated components in order to avoid degrading microstructure and mechanical properties. In particular, it may be desirable or necessary to avoid any unwanted intermetallic compounds or undesirable phases which could cause embrittlement. Examples of useful platings or coatings include gold and platinum plating for nickel base superalloys, and palladium, platinum, and ruthenium for titanium alloys. In particular, gold does not oxidize and can protect the high performance alloy insert from oxidation. In another embodiment, a less expensive temporary coating or flux may be used to protect the heated surfaces from reacting with the environment and help wetting and bonding of the bonding surfaces. The temporary coating or flux may be subsequently pushed out of the joint as force is applied to the heated components. The electroplasticity principle as well as proper joint design can be used with temporary coatings for optimum bond quality. In yet another embodiment, the process of heating and joining may be performed in an inert atmosphere.

A force is applied to the components 122, 124 to push the bonding surfaces 126, 128 together, as shown in step 34 and depicted in FIG. 4. The force may be applied using a press or other mechanical means of applying opposing forces to the opposing components 122, 124. In some embodiments, ultrasonic vibration is applied to one or both of the opposing components 122, 124, wherein the ultrasonic vibration aids in the joining process. In more detail, the minimum applied force may be sufficient to ensure substantially full contact across the bonding surfaces despite any small gaps due to surface irregularities such as scratches, ridges, recesses, or other surface imperfections. The applied force may be sufficient to push out any potentially oxidized or metallurgically compromised material from the bonding area. This ensures that bonding between bonding surfaces remains complete and without discontinuities, gaps, or other voids or inclusions between the joined surfaces 126, 128. In one implementation, approximately between one-hundredth inch and one-tenth inch of metal may be pushed out all around the joint. The amount of metal may depend on the design of the joint.

Simultaneous with applying the force, an electric current is applied to the components 122, 124 to joule heat the bonding surfaces 126, 128, as shown in step 36 and depicted in FIG. 4. Sufficient applied force and electric energy is determined via calculation, Finite Element Modelling, and/or experimentation to ensure complete bonding between the components at the bonding surfaces. In more detail, resistive heating of the adjoining contact surfaces may be achieved using joule heating. The amount of generated heat and the resultant temperature profile may be calculated or otherwise determined from the electric energy (kilowatt-hours) applied, contact area, physical and electric properties of the alloy such as thermal conductivity, density, heat capacity, electric resistivity, and the geometry of the components, and can be simulated using modeling tools.

The configuration of the joint and the power and time applied across the joint may be designed to achieve specific temperatures at the bonding surfaces, which may vary depending on the alloys and tempers used, the configuration including the contact area and thicknesses of the components and the bonding surfaces, the power supply, and possibly other applicationspecific considerations. The present technology is applicable to substantially all alloy systems, and can be used to join components made either from the same alloy or from different alloys. The interface temperature is selected to be sufficiently high (see the examples, below) to allow efficient forge-welding of the components, but not so high as to result in incipient melting or to result in phase transformations which would result in unwanted metallurgical and mechanical property degradation for the specific alloys used for additive manufacturing. Typically, the lower the interface temperature and the shorter the heating time, the higher the force required to join the components. For many applications, approximately one kilowatt-hour of electrical energy per two to ten pounds of material to be heated may be sufficient to rapidly heat between one-thirty-second inch and one-quarter inch on both sides of the bonding surface and achieve effective forge welding between the components, and approximately between ten and thirty tons per square inch of contact area may be sufficient force to achieve effective forge welding. However, it may be desirable to use finite element modeling or a similar technique to optimize the operational parameters for particular applications.

For example, for titanium parts, the interface temperature range may be approximately between one thousand five hundred degrees Fahrenheit and one thousand six hundred fifty degrees Fahrenheit (1500°-1650° F) for Ti-6Al-4V. The joint temperature may vary from approximately between one thousand three hundred degrees Fahrenheit and one thousand seven hundred seventy five degrees Fahrenheit (1300°-1775° F) depending on the tonnage pressure applied and the duration of the resistance heating. A high thermal gradient may be employed across the joint to minimize the duration of the heating and bonding and to minimize the depth of the heat affected zone (HAZ) in order to achieve desirable or required mechanical properties. The force applied may typically be at or above the force required for super plastic forming and sufficiently high, typically between about ten (10) and thirty (30) tons, to ensure full and intimate contact at the joint even in presence of some localized gaps between the bonding surfaces. Tonnage pressure may be determined to ensure adequate localized metal flow at the joint at the specified temperature.

Another factor that may be considered for the forge welding process is thermal gradient within the components 122, 124 being joined or otherwise bonded together, especially near the joint, to control the depth of the HAZ. For titanium parts, the interface temperature may also be selected to mitigate the risk of incipient melting, and to minimize or eliminate the risk of unwanted solid state phase transformation (for example, exceeding the beta transus temperature), significant coarsening of primary alpha phase, or formation of harmful phases such as alpha-two (Ti3Al) precipitates. The temperature may also be sufficiently high (see the examples, below) to allow hot plasticity to ensure full contact between the bonding surfaces, and also to force out any undesirable compounds formed due to reaction with the environment and/or to prevent the entrapment of inclusions or possible defects such as a lack of bonding along the joint. The excess material forced out of the joint may be subsequently removed by a grinding or machining operation.

For aluminum alloys, the interface temperature may also be close to the solution treatment temperature and below the incipient melting temperature of the alloy. The interface temperature for aluminum alloys may vary from approximately between seven hundred degrees Fahrenheit to one thousand fifty degrees Fahrenheit (700°-1050° F) depending on the specific alloys used. It may be desirable to keep the interface temperature between approximately twenty five degrees Fahrenheit and fifty degrees Fahrenheit (25°-50° F) below the minimum solution temperature for the specific alloy to avoid unwanted grain growth and ensure the absence of incipient melting for alloys prone to segregation. Additionally, the joint may be rapidly quenched after the power is turned off (typically within ten seconds) for aluminum alloys to prevent the formation of coarse precipitates, prevent the softening of the alloy in the HAZ, and allow for achieving a super saturated solid solution condition, which is a precursor for achieving a desirable combination of mechanical properties and corrosion resistance upon subsequent aging. The heat up cycle may be sufficiently short to minimize the adverse impact on the HAZ.

Stainless steels and nickel base alloys may be heated at the joint to near the solution treating temperature and below the incipient melting temperature, and also to prevent formation of detrimental phases such as delta ferrite for corrosion resistant precipitation hardening steels, sigma phase, or laves phase for nickel base superalloys. The interface temperature may vary from between about one thousand six hundred fifty degrees Fahrenheit and two thousand one hundred degrees Fahrenheit (1650°-2100° F) depending on the specific alloy used. It may be preferable to use the lowest temperature that can result in full metallurgical bond at the available tonnage.

Due to focused rapid heating at the joint interface, the HAZ depth can typically be kept to a minimum. Nevertheless, sufficient time may be required to achieve full metallurgical bonding, which could result in a greater HAZ depth. Overheating of precipitation hardening alloys in HAZ can result in the coarsening of precipitates or metallurgical phase changes. Inert quench media could be used to allow for rapid heat transfer which could eliminate the need for re-solution treatment of the bonded assembly. In this case, the integrated part may only need precipitation hardening treatment, which can also function as a stress relief operation to minimize dimensional instability in subsequent machining.

In one implementation, the electric current may be pulsed to induce electroplasticity to improve bonding across the joint by facilitating reducing gaps in the joint and pushing contaminated metal out of the joint, while also allowing for using a lower welding temperature. In electroplasticity, dislocation unpinning reduces excessive strain hardening at and near the joint and reduces the flow stresses required to join the components and push out excess material, coating, and inclusions from the joint. Electroplasticity affects crystallographic alignment, increases electron mobility at lower temperatures, and can aid in establishing effective solid state (metallurgical) bonds across the joint. The use of electroplasticity facilitates removing any gaps, voids, or inclusions in the joint interface and pushes any metal that might have been contaminated by reactions with the environment out of the joint, while also allowing for more metallurgically favorable lower temperatures that can be optimized for each alloy.

The use of electroplasticity is particularly advantageous when bonding reactive alloys. One benefit of electroplasticity is the creation of strong bonds at temperatures below precipitation hardening temperatures for various alloys. This advantage can eliminate the need for re-heat treatment which otherwise can increases costs and contribute to dimensional changes. Another benefit of using pulsed reverse polarity direct current or using alternating current is that the repeating positive cycle produces a scrubbing effect on the surface by breaking up oxides that otherwise may interfere with achieving high quality bonds between the bonding surfaces.

The applied force and electric energy should be sufficient to push out approximately between one hundredths inch and one tenth inch of metal 132 around the joint, as depicted in FIG. 5, to facilitate a visual or physical check for achieving full metallurgical bonding at the joint. This may also involve pushing out excess coating and/or reacted or contaminated material.

To facilitate this pushing out, one or both of the bonding surfaces 126, 128 may, as mentioned, be drafted (i.e., contoured, as seen in, e.g., FIG. 2). Using drafted surfaces may result in the edge of the convex to be initially slightly hotter that the rest of the joint, but as the components are pushed together the heat moves further into the periphery of the joint. The targeted volume of metal to be pushed out may correspond to the volume of the localized area that exceeded the critical temperature with enough safety margin to result in metallurgical compatibility throughout the joint. An example of high temperature phase is delta ferrite in many precipitation hardening stainless steel alloys. Pushing out some material from the joint removes unwanted phases, localized incipient melting, and surface contamination from the edge of part. Parameters such as joint shape, temperature, power, time, and force can be determined in advance. However, this may require destructive testing of the first article to ensure the validity of the process parameters.

The resulting single part 134, or bonded preform, may then be, as desired or required, heat-treated, inspected, and/or machined to the final dimensions, as shown in step 38 and depicted in FIG 6. Bonding schedules may be subsequently validated through destructive inspection and testing of the first article to ensure the absence of defects and conformance to metallurgical and mechanical property requirements. Subsequent parts may then be manufactured to the same bulk additive manufacturing process schedule. For subsequent production parts, once joining is completed, the non-bonding surfaces may be machined and the part may be visually and non-destructively inspected to ensure absence of defects across the joint.

It will be appreciated that embodiments provide a number of advantages over prior art methods. Metal additive machining preforms are built by metallurgical bonding of relatively large blocks of metal rather than one layer at a time. Engineered joint design pushes out excess coating from the joint interface to eliminate defects such as incomplete bonding, porosity, and non-metallic inclusions. Permanent and/or temporary coatings protect against contamination. The use of electroplasticity reduces the temperature and flow stresses to ensure full contact along the joint at all times at temperatures optimized for achieving excellent metallurgical quality solid-state bonds, to eliminate defects such as lack of bonding, and also to push out all potentially contaminated metallic surfaces made from reaction of heated interface and the environment such as oxide inclusions, nitride inclusions, porosity, and incomplete bonding. The use of electroplasticity also provides the option to bond below the precipitation hardening temperatures to avoid the need for re-heat treatment. Hybrid machines may be developed for both forming and bonding of machining preforms for aerospace alloys.

Although the invention has been described with reference to the one or more embodiments illustrated in the figures, it is understood that equivalents may be employed and substitutions made herein without departing from the scope of the invention as recited in the claims.

Having thus described one or more embodiments of the invention, what is claimed as new and desired to be protected by Letters Patent includes the following:

## Claims

1. A method of bonding two or more metallic components together, each of the two or more metallic components having a bonding surface, the method comprising:
protecting the bonding surface of each of the two or more metallic components;
applying a force to each of the two or more metallic components to push the bonding surfaces together; and
simultaneous with applying the forces, applying an electric current through the bonding surfaces to joule heat and forge weld the bonding surfaces together to form a single piece.

2. The method of claim 1, wherein the step of applying an electric current is pulsed to induce electroplasticity in the two or more metallic components.

3. A method of bonding two or more metallic components into a single piece, each of the two or more metallic components comprising a bonding surface, the method comprising:
protecting the bonding surfaces of the two or more metallic components from reaction with an environment;
applying a force to the two or more metallic components to push the bonding surfaces together; and
simultaneous with applying the force, passing an electric current through the bonding surfaces to joule heat and weld the bonding surfaces together at a joint to form the single piece,
wherein the electric current is pulsed to induce electroplasticity in the two or more metallic components.

4. The method of claim 3, wherein the force and the electric current are sufficient to push out between one-hundredth inch and one-tenth inch of metal at the joint around the bonding surfaces.

5. The method of any preceding claim, wherein protecting the bonding surfaces comprises applying a coating to the bonding surfaces.

6. The method of any preceding claim, wherein protecting the bonding surfaces comprises shielding the bonding surfaces with a noble gas; or wherein protecting the bonding surfaces comprises placing the bonding surfaces in a vacuum.

7. A method of bonding at least two metallic components together, each of the at least two components having a bonding surface, the method comprising:
positioning each of the bonding surfaces immediately adjacent to each other;
applying a force to each of the two or more metallic components to push the bonding surfaces together; and
simultaneous with applying the forces, applying an electric current through the bonding surfaces to permanently join the at least two components together to form a single piece.

8. The method of claim 7, further comprising protecting at least one of the bonding surfaces after positioning each of the bonding surfaces immediately adjacent to each other.

9. The method of claim 7 or 8, wherein protecting at least one of the bonding surfaces includes shielding at least one of the bonding surfaces by applying a continuous flow of an inert gas across the entire bonding surface being shielded prior to and during at least a portion of the steps of applying a force and applying an electric current.

10. The method of any one of claims 7 to 9, wherein protecting at least one of the bonding surfaces includes coating the at least one of the bonding surfaces with a protective flux.

11. The method of any one of claims 7 to 10, wherein protecting at least one of the bonding surfaces includes placing each of the at least two components into an inert chamber or a vacuum environment prior to the step of positioning the bonding surfaces immediately adjacent to each other.

12. The method of any one of claims 7 to 11, wherein the force applied to force to each of the two or more metallic components is between about ten and thirty tons.

13. The method of any one of claims 7 to 12, wherein the step of applying an electric current through the bonding surfaces causes a temperature of the bonding surfaces to increase to about seven hundred and two thousand one hundred degrees Fahrenheit (700°-2100° F).

14. The method of any preceding claim, wherein protecting at least one of the bonding surfaces includes plating the at least one of the bonding surface with a noble metal, and optionally applying a layer of gold, palladium, or platinum to at least one of the bonding surfaces.

15. The method of any preceding claim, wherein applying the force comprises using a press to push the bonding surfaces together.
